# EUROPÄISCHE PATENTANMELDUNG

(11) **EP 0 550 868 A1**
(43) Veröffentlichungstag der Anmeldung: **14.07.1993**
(21) Anmeldenummer: 92121722.0
(22) Anmeldetag: 21.12.1992
(51) Int. Cl.: G21C 3/32, G21C 3/324

(54) **Brennelement für einen Siedewasserreaktor mit einer redundanten Tragstruktur und einem verriegelten Brennelement-Kasten**

(30) Priorität: 09.01.1992 DE 4200363; 15.04.1992 DE 4212645
(71) Anmelder: SIEMENS AKTIENGESELLSCHAFT, D-80333 München (DE)
(72) Erfinder: Meier, Werner, W-8551 Kunreuth (DE); Lippert, Hans-Joachim, W-8552 Höchstadt (DE); Rau, Peter, W-8551 Leutenbach (DE); Körner, Lothar, W-8706 Höchberg (DE)

(57) **Zusammenfassung**

Die Brennstäbe (FR) eines Siedewasser-Brennelementes sind von einem tragenden Skelett gehalten, das eine Bodenplatte (LTP), eine Deckplatte (UTP) und einen Griff (H) enthält, wobei ein Kühlmittelrohr (WR) und/oder tragende Brennstäbe Bodenplatte, Deckplatte und Griff so miteinander verbinden, daß der Abstand (d) zwischen Bodenplatte und Deckplatte vorgegeben ist und ein in einen Brennelement-Kasten (WC) einschiebbarer Einsatz entsteht. Die Bodenplatte einerseits und die Deckplatte mit dem Griff andererseits sind über Anschläge derart am Brennelement-Kasten gehalten, daß eine zweite (redundante) Tragstruktur vorliegt, die zumindest beim Anheben des Griffes einen maximalen Abstand (d) zwischen Bodenplatte und Griff festlegen. Eine besondere Verriegelung zwischen Brennelement-Kasten und Skelett ist als ein federnd einschnappender Riegel oder Klinke ausgebildet.

## Beschreibung

Die Erfindung betrifft ein Brennelement für einen Siedewasserreaktor mit einem Bündel ungefähr parallel zueinander angeordneter Brennstäbe, die in einem Skelett gehalten sind und zusammen mit dem Skelett in einen Brennelement-Kasten eingesetzt sind.

Das Skelett enthält eine an einem Griff gehalterte Deckplatte am oberen Ende des Bündels, eine Bodenplatte am unteren Ende des Bündels und in der Regel mehrere Abstandhalter, die an mehreren axialen Positionen des Bündels angeordnet sind, aus quer zum Bündel verlaufenden Stegen bestehen und über Federn und/oder Noppen die Brennstäbe seitlich abstützen. Um die Bodenplatte mit der Deckplatte und dem Griff zu verbinden, enthält das Skelett mindestens ein Tragelement, wofür z.B. die Eckstäbe des Bündels und/oder andere ausgewählte Brennstäbe verwendet werden können, die an ihren beiden Enden mit den Platten verschraubt sind. Nach der vorveröffentlichten internationalen Patentanmeldung WO 91/13441 kann auch ein zentrales Wasserrohr als Tragelement benutzt werden, an dem die Abstandhalter befestigt und über Verschraubungen an den beiden Rohr-Enden die Bodenplatte und die Deckplatte mit dem Griff gehalten sind. Bei eingesetzten Brennstäben bilden Skelett und Brennstab-Bündel einen Einsatz, der in den das Bündel seitlich umgebenden, oben offenen Brennelement-Kasten eingesetzt oder aus ihm herausgenommen werden kann. Durch Anheben am Griff kann das Skelett mit den Brennstäben und dem aufgeschobenen Brennelement-Kasten zu Inspektions- oder Reparaturzwecken nach einem Betriebszyklus oder zum Auswechseln aus dem Kerngitter des Siedewasserreaktors herausgenommen werden.

Die Erfindung betrifft ferner eine - auch bei anderen Brennelementen einsetzbare - Verriegelung, die den Brennelement-Kasten lösbar am Kopfteil des Brennelementes hält.

Der Erfindung liegt die Aufgabe zugrunde, sicherzustellen, daß das Skelett und das Brennstabbündel auch dann noch am Griff angehoben und bewegt werden kann, wenn infolge einer Beschädigung, z.B. gerissenen oder gebrochenen Verschraubungen der Tragstäbe oder des Wasserrohrs, keine tragende Verbindung zwischen Bodenplatte und Deckplatte im Skelett mehr vorliegt.

Diese Aufgabe wird gemäß der Erfindung durch redundante Tragmittel (insbesondere durch außerhalb des Brennelement-Skelettes angeordnete (Tragmittel) gelöst, die beim Anheben des Griffes die Bodenplatte, den Brennelement-Kasten und die Deckplatte zusammenhalten.

So kann z.B. die Bodenplatte in ein am Kasten befestigtes Fußteil eingesetzt sein und die redundanten Tragmittel einen am Brennelement-Kasten und der Deckplatte oder dem Griff angreifenden, lösbaren oberen Anschlag enthalten.

Die redundanten Tragmittel enthalten vorzugsweise einen am Brennelement-Kasten und der Deckplatte oder dem Griff angreifenden oberen Anschlag, der zumindest beim Anheben des Griffes einen Maximalabstand zwischen dem Griff und einem an der Bodenplatte angeordneten, unteren Teil des Brennelement-Kastens festlegt. Ferner können die redundanten Tragmittel einen am Brennelement-Kasten und der Bodenplatte oder einem die Bodenplatte tragenden Fußteil angreifenden Anschlag enthalten, der zumindest beim Anheben des Brennelement-Kastens einen Maximalabstand zwischen der Bodenplatte und einem an der Deckplatte angeordneten oberen Teil des Brennelement-Kastens festlegt.

Bevorzugt ist hierbei zumindest der obere Anschlag in montiertem Zustand des Brennelements z.B. über Reibungskräfte oder Federkräfte in einer Aussparung des Brennelement-Kastens und an einer Anschlagfläche der Deckplatte oder des Griffes gehalten, wobei dieser obere Anschlag zur Demontage des Brennelement-Kastens mittels eines Werkzeuges durch Gegenkräfte so weit beweglich ist, daß die Deckplatte mit dem Griff gegenüber dem Brennelement-Kasten verschiebbar ist.

Diese und weitere vorteilhafte Ausbildungen der Erfindung sind in den Unteransprüchen gekennzeichnet und werden anhand mehrerer Ausführungsbeispiele und Figuren näher erläutert.

Dabei zeigen:
Figur 1 einen Längsschnitt durch das obere und untere Ende des Brennelementes im fertig montierten Zustand,
Figur 2 einen Längsschnitt durch einen Teil des Unterendes,
Figuren 3 und 4 zwei Längsschnitte durch ein Oberteil mit einer angeschraubten Feder zum Verriegeln des Brennelement-Kastens am Oberteil,
Figur 5 eine als Blattfeder ausgebildete Verriegelungsfeder,
Figur 6 einen Teilquerschnitt durch das Oberende des Brennelementes und des Kastens mit einem verschiebbaren Riegel,
Figur 7 eine Aufsicht auf das Oberende des Brennelementes,
Figuren 8 und 9 Längsschnitte durch das Oberende.

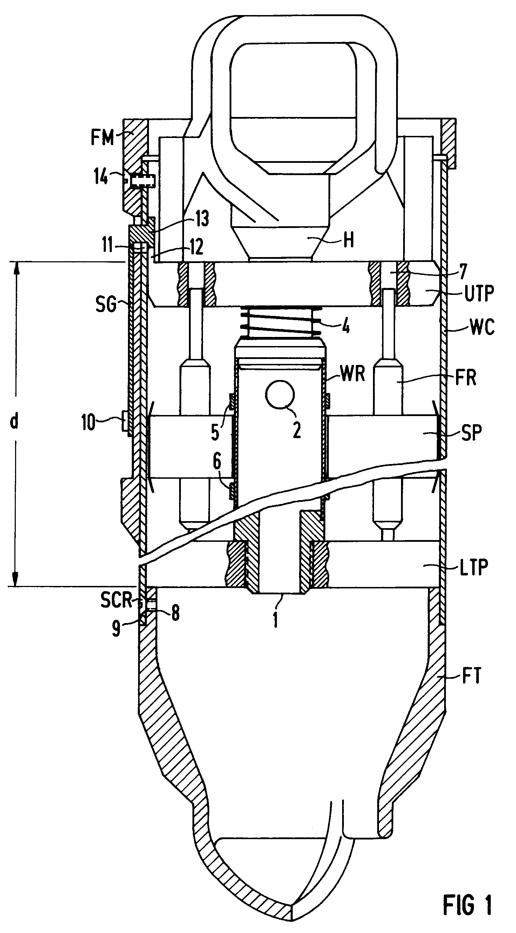

Bei einem bevorzugten Ausführungsbeispiel enthält das Brennelement ein zentrales, einen Durchtrittskanal für flüssiges Kühlmittel bildendes Kühlmittelrohr ("Wasserrohr" WR), das unten und oben Öffnungen 1, 2 aufweist und sich von der Bodenplatte ("lower tie plate" LTP) bis zur Deckplatte ("upper tie plate" UTP) erstreckt. Die Bodenplatte LTP ist mit dem unteren Endstück des Kühlmittelrohrs WR verschraubt. Auch das obere Endstück trägt eine Verschraubung, wobei hier vorgesehen ist, daß ein Bolzen 3 des Rohres WR durch eine Öffnung der Deckplatte UTP und eines aufgesetzten Griffes H hindurchgreift. Das überstehende Ende des Bolzens 3 trägt ein Gewinde, auf dem eine einen Anschlag für Griff und Deckplatte UTP bildende Mutter aufgesetzt ist. In Figur 1 wird diese Mutter erst sichtbar, wenn Griff und Deckplatte gegen eine auf Druck beanspruchte, zwischen Wasserrohr und Deckplatte eingesetzte Spannfeder 4 gedrückt wird. Bei Entlastung dieser Feder verschwindet die Mutter in einer profilierten Ausnehmung des Griffes H, in der diese Mutter gegen ein unbeabsichtigtes Drehen und Lösen gesichert ist.

An verschiedenen axialen Positionen des Wasserrohres sind Abstandhalter ("spacer" SP) zwischen Anschlägen 5 und 6 gehalten. Die Stege dieses Abstandhalters SP bilden Maschen, in denen die Brennstäbe ("fuel rods" FR) abgestützt sind. Die oberen Endkappen dieser Brennstäbe sind als Bolzen ausgebildet und in Bohrungen 7 der Deckplatte UTP lose geführt.

Kühlmittelrohr, Abstandhalter, Boden- und Deckplatte sowie Brennstäbe bilden demnach einen Einsatz, der am Griff H gehalten und von oben oder unten in einen unten und oben offenen Brennelement-Kasten ("Wasserkanal" WC) eingesetzt werden kann. Dabei kommt dieser Einsatz mit der Bodenplatte LTP auf dem oberen Rand eines Fußteils FT zu liegen, auf dem die Bodenplatte aufgesetzt oder auch aufgeschweißt sein kann. Ist die Bodenplatte LTP an das Fußteil FT angeschweißt, so bildet es ebenfalls einen Teil des Skelettes, auf das von oben der Brennelement-Kasten WC aufschiebbar ist. Das gesamte, fertig montierte Brennelement kann mit dem Griff angehoben werden. Der Abstand d zwischen der Oberfläche der Deckplatte UTP und der Unterseite der Bodenplatte LTP ist bei dieser Konstruktion des tragenden Skelettes im wesentlichen konstant, d.h. er ändert sich nur durch die thermische Ausdehnung des Kühlmittelrohres WR, wobei diese Konstruktion auch eine thermische Ausdehnung der Brennstäbe FR ermöglicht.

Bei einer Zerstörung des tragenden Skelettes, z.B. einem Bruch des Kühlmittelrohres WR oder einem Abreißen einer der Verschraubungen, die den Griff H an der Deckplatte und die Bodenplatte LTP am Kühlmittelrohr WR (oder gegebenenfalls tragenden Brennstäben) halten, können durch Anheben des Griffes H die vom Fußteil FT gehaltene Bodenplatte und die darauf ruhenden Brennstäbe nicht mehr aus dem Kern entfernt werden. Der Abstand d vergrößert sich also in dem Maß, in dem der Griff H angehoben wird.

Die Erfindung sieht daher eine redundante Tragstruktur vor, die zusätzlich zu den Tragmitteln des Skelettes sicherstellt, daß der Abstand d einen gewissen Maximalwert nicht überschreitet. Diese redundante Tragstruktur kann auf einfache Weise von dem Brennelement-Kasten WC und entsprechenden, den Maximalwert d festlegenden Anschlägen oder Haltemitteln zwischen dem Brennelement-Kasten und den beiden Platten UTP und LTP gebildet werden.

Dazu ist am unteren Rand des Bündels ein geeignetes Befestigungsmittel für den Brennelement-Kasten und die Bodenplatte oder das die Bodenplatte tragende Fußteil FT vorgesehen. Dieses Befestigungsmittel kann ein in der Kastenwand gehaltener Anschlag sein, der seitlich in die Bodenplatte LTP eingreift oder diese Bodenplatte an ihrer Unterseite Übergreift. Dieser Anschlag kann z.B. ein am Fußteil befestigter Federbügel sein, der zunächst nur in eine auf den Brennelement-Kasten gerichtete Bohrung eingreift, so daß der am Fußteil und der Bodenplatte anliegende untere Rand des Brennelement-Kastens auf Fußteil und Bodenplatte aufgeschoben werden kann. In diesem Fall trägt auch der untere Rand des Brennelement-Kastens eine entsprechende Bohrung, in die nach Aufschieben des Brennelement-Kastens der Federbügel aufgrund seiner Federkraft einschnappt, so daß nun der Federbügel einen in Aussparungen des Fußteils (oder der Bodenplatte) und des Brennelement-Kastens eingreifenden Anschlag bildet, der beim Anheben des Brennelement-Kastens einen Maximalwert für den Abstand d zwischen der Bodenplatte und dem an der Deckplatte UTP anliegenden oberen Rand des Brennelement-Kastens festlegt.

Ein entsprechender Federbügel kann natürlich auch an der Außenseite des Fußteils FT oder der seitlichen Außenfläche des Brennelement-Kastens befestigt sein, um nach Aufschieben des Brennelement-Kastens in entsprechende Aussparungen des Brennelement-Kastens und des Fußteils FT (bzw. der Bodenplatte LTP) einzugreifen und in dieser Stellung gehalten zu werden.

In Figur 1 ist als unterer Anschlag eine Schraube SCR vorgesehen, die nach Aufsetzen des Kastens durch ein entsprechendes, zur Aufnahme des Schraubenkopfes geformtes Loch 9 des unteren Kastenrandes hindurch in eine Gewindebohrung 8 des Fußteils FT eingeschraubt ist. Da diese Schraube an einer Stelle des Brennelementes sitzt, die thermisch und - bei intaktem Tragskelett - auch mechanisch kaum belastet ist, genügt es zur Halterung dieses Anschlages, die Gewindebohrung 8 mit einem hinreichend geringen Spiel dem Schraubenprofil anzupassen, so daß die Schraube nur mit einigem Kraftaufwand in die Gewindebohrung 8 eingesetzt werden kann und die dabei entstehenden Reibungskräfte diese Schraube halten.

Da durch die Halterung des Brennelement-Kastens am Fußteil auch die seitliche Lage der am Fußteil aufliegenden Bodenplatte LTP festgelegt ist, kann bei dieser Konstruktion auf eine Schweißverbindung zwischen Bodenplatte und Fußteil verzichtet werden. Sofern nicht erforderlich ist, die im Skelett eingesetzten Brennstäbe für Inspektionszwecke seitlich zugänglich zu machen, kann zur Fixierung der Bodenplatte am Brennelement-Kasten und am Fußteil statt einer Schraube oder eines entsprechenden Anschlages allerdings auch vorgesehen sein, diese Teile miteinander zu verschweißen.

Einen auf die beschriebene Art durch einen Federbügel gehaltenen, zwischen Brennelement-Kasten und Platte angeordneten Anschlag zeigt Figur 1 als Halterung der Deckplatte UTP.

Üblicherweise tragen Griff und Deckplatte einen Rahmen, der einerseits zur Halterung des Brennelement-Kastens WC dessen oberen Rand übergreift, andererseits als Anlagefläche für die Rahmen benachbarter Brennelemente im Reaktorkern dient. Gemäß Figur 1 ist an der Außenfläche dieses Rahmens FM über eine Arretierung 10 ein Federbügel SG befestigt, dessen freies Ende durch eine Aussparung 11 des Brennelement-Kastens hindurchgreift und mit einen Profilteil 13 an einer Anschlagfläche 12 der oberen Deckplatte UTP anliegt. Durch die auf Druck beanspruchte Spannfeder 4 ist die Deckplatte UTP so weit nach oben geschoben, daß das Profilteil 13 des Federbügels SG auch dann unverlierbar zwischen der Anschlagfläche 12 und der Kastenwand gehalten ist, wenn der Federbügel SG selbst brechen sollte. Alternativ oder zusätzlich zeigt Figur 1 eine Schraube 14, mit der Rahmen FM, Brennelement-Kasten WC und Griff H in dieser Stellung miteinander verschraubt sind, wie dies auch schon bei der als unteren Anschlag dienenden Schraube SCR beschrieben ist.

Durch diese Konstruktion ist sichergestellt, daß auch bei einem Bruch der tragenden Teile des Tragskelettes (z.B. einem gebrochenen Kühlmittelrohr WR) ein Maximalwert für den Abstand d zwischen der oberen Deckplatte UTP und dem unteren Rand des Wasserkastens WC (und damit der Lager der dort anliegenden Bodenplatte LTP) selbst dann nicht überschritten wird, wenn das Brennelement am Griff H angehoben wird.

Zur Demontage des Kühlmittelrohres wird die Deckplatte UTP gegen die Spannfeder 4 gedrückt, so daß das Profilteil 13 am Federbügel und die daran angepaßte Aussparung 11 im Brennelement-Kasten einander gegenüberstehen und mittels eines Werkzeuges das Profilteil 13 durch die Aussparung 11 hindurch herausgebogen und der Brennelement-Kasten WC abgezogen werden kann. Die Schrauben SCR und 14 sind dabei gelöst. Beim Montieren des Brennelements wird entsprechend umgekehrt vorgegangen, indem zunächst durch ein geeignetes Werkzeug der Federbügel so weit herausgebogen ist, daß der Brennelementkaten auf das Skelett aufgeschoben werden kann, bis durch Freigabe des Federbügels bei nach unten gedrückter Deckplatte das Profilteil durch die Öffnung 11 hindurch in ihre Endstellung einschnappen und durch Entlasten der Feder 4 in der vom Profilteil 12 vorgegebenen Endstellung einrasten kann.

Selbstverständlich kann ein entsprechender, in eine Ausnehmung des Brennelement-Kastens einrastender Federbügel statt an der Seite des Rahmens auch an der Deckplatte UTP oder an der Oberseite des Rahmens FM befestigt werden. Ebenso ist es auch möglich, einen von Federkräften oder Reibungskräften am Brennelement-Kasten gehaltenen Anschlag vorzusehen, der in eine entsprechende Öffnung des Rahmens und/oder des Griffes und/oder der Deckplatte eingreift.

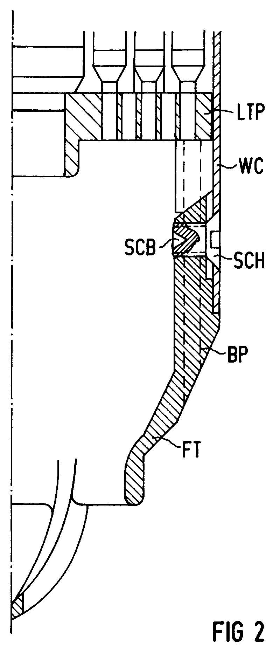

Während also das Profilteil 13 einen oberen Anschlag für den Brennelement-Kasten bildet, der federnd am Skelett gehalten ist und quer zur Brennelementachse durch ein Fenster (Aussparung 11) des Brennelement-Kastens greift, ist der untere Anschlag vorteilhaft als eine Schraube ausgebildet, die den Brennelement-Kasten und das Fußteil druchgreift (Figur 2). Diese Schraube liegt etwa quer zur Brennelement-Achse und besitzt einen von außen in den Brennelement-Kasten eingesenkten Kopf SCH, während der Gewindeteil eine vom Inneren des Fußteils FT zugängliche, auf den Schraubenkopf SCH gerichtete Bohrung SCB aufweist, die geringfügig aufgeweitet wird, nachdem die Schraube in das Fußteil eingeschraubt ist. Dadurch ist der Gewindeteil der Schraube fest in das Gegengewinde des Fußteils gepreßt, so daß eine Verbindung zwischen Kasten und Fußteil entsteht, die nur noch unter Beschädigung der Schraube lösbar ist. Die Schraube selbst ist auf diese Weise gegen ein Verlieren gesichert.

Dabei ist es zweckmäßig, das Fußteil im Bereich der Schraube zu verstärken, und Figur 2 zeigt, daß innerhalb dieses verstärkten Teiles Bypaßbohrungen BP angeordnet sein können, durch die Kühlmittel in den Bereich der Brennstäbe eingeleitet werden kann.

Als oberer Anschlag, der den Brennelement-Kasten tragend am Oberteil (oberen Ende des Skelettes) hält, kann vorteilhaft ein Verriegelungsteil verwendet werden, das federnd in entsprechende Aufnahmestellen des Brennelement-Kastens und des Oberteils einrastet und daher auf einfache Weise lösbar, aber unverlierbar am Brennelement befestigt sein kann.

Eine derartige Verriegelung ist auch dann einsetzbar, wenn das Brennelement kein Skelett enthält, das zusammen mit den Brennstäben einen aus dem Brennelement-Kasten herausnehmbaren, integrierten Einsatz bilden würde. Die Erfindung betrifft daher Brennelemente für einen Siedewasser-Reaktor, die ein Bündel ungefähr zueinander paralleler Brennstäbe, Abstandhalter zur seitlichen Fixierung der Brennstäbe, ein Unterende mit einem Fußteil und einer Bodenplatte und ein Oberende mit einer Deckplatte sowie einen das Bündel mit den Abstandhaltern, der Bodenplatte und der Deckplatte seitlich umgebenden Brennelement-Kasten enthalten. Durch Verschraubungen oder andere Haltemittel ist das Unterende im montierten Zustand am Brennelement gehalten, wobei die Bodenplatte als unterer Anschlag für die Brennstäbe dient. Entsprechend dient die Deckplatte am oberen Ende als oberer Anschlag für die Brennstäbe, wobei dieses Oberende einen mit der Deckplatte und einem seitlich überstehenden Distanzstück verbundenen Griff enthält.

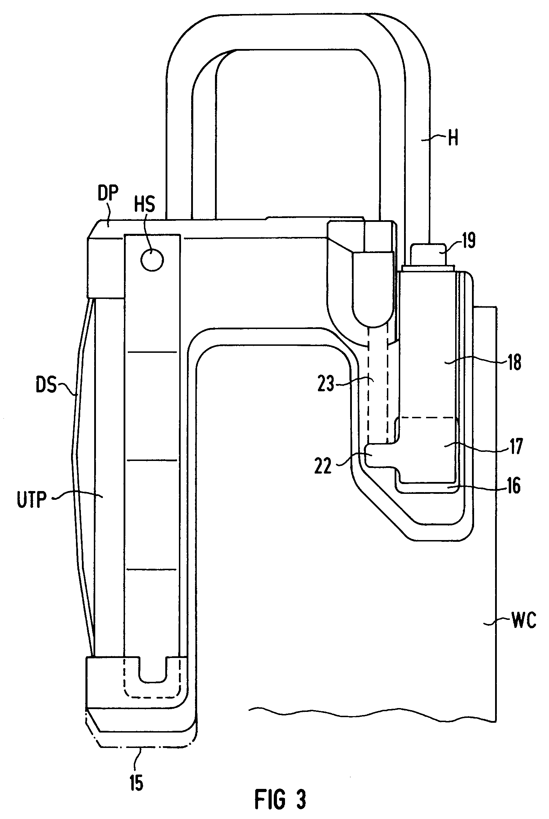

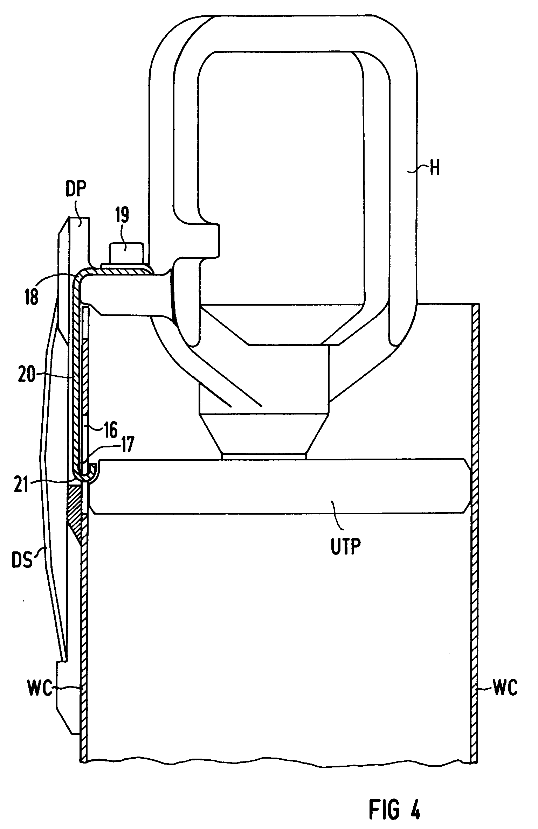

Die Figuren 3 und 4 zeigen zwei Längsschnitte durch ein Ausführungsbeispiel, bei dem eine Feder mit einem durch ein Fenster des Brennelement-Kastens greifenden Verriegelungsteil am Oberende gehalten ist.

In Figur 3 ist der einen polygonalen, insbesondere quadratischen, Querschnitt aufweisende Brennelement-Kasten WC und der Griff H erkennbar, der mit der Deckplatte UTP und einem Rahmen mit dem Distanzstück DP ein einstückiges, gegossenes Bauteil bildet oder auf andere Weise zusammengehalten ist. Das Distanzstück DP greift an wenigstens zwei Seiten über den oberen Rand des Brennelement-Kastens WC und bildet im Kernverband eine Anlagefläche, an der benachbarte Brennelemente anliegen. Dabei kann es vorteilhaft sein, mittels einer Befestigungsschraube HS eine Distanzfeder DS am Kopf zu halten, um das Brennelement an den benachbarten Brennelementen abzustützen.

Das Oberende mit der Deckplatte und dem Distanzstück kann gegen die Rückstellkraft der bereits in Figur 1 gezeigten Spannfeder 4 zur Montage und zur Demontage in Richtung auf das Unterende in eine Position verschoben werden, die durch die strichpunktierte Linie 15 angedeutet ist.

Dadurch kann ein durch ein Fenster 16 greifendes Verriegelungsteil 17 aus dem Fenster 16 herausbewegt werden. Dieses Verriegelungsteil 17 ist dabei durch eine Verriegelungsfeder 18 am Oberteil des Brennelementes gehalten. Es kann daher gegen die Rückstellkraft dieser Verriegelungsfeder aus dem Fenster herausgebogen werden.

Wie Figur 4 zeigt, ist die Verriegelungsfeder am Oberteil befestigt, indem ein Ende der Feder über die Halterungsschraube 19 am Distanzstück DP angeschraubt ist. Die Verriegelungsfeder weist dabei ein in Richtung des unteren Endes flach am oberen Teil des Brennelement-Kastens WC anliegendes Federteil 20 auf, dessen unteres Ende 21 hakenförmig von oben in das Fenster 16 eingreift. Wird daher das Oberende des Brennelement-Kastens am Griff H angehoben, so hängt der Brennelement-Kasten in dem hakenförmigen Ende 21 der Verriegelungsfeder.

Vorteilhaft weist eine derartige, als Blattfeder ausgebildete Verriegelungsfeder eine Angriffsfläche auf, die z. B. seitlich angeordnet sein kann (Lasche 22) um die Feder aus dem Fenster 16 herauszubiegen. Figur 3 zeigt, daß auch der Rahmen des Oberteils zu dieser Angriffsfläche 22 führende Demontage-Bohrungen besitzt, durch die ein Stift zum Bewegen der Feder einführbar ist.

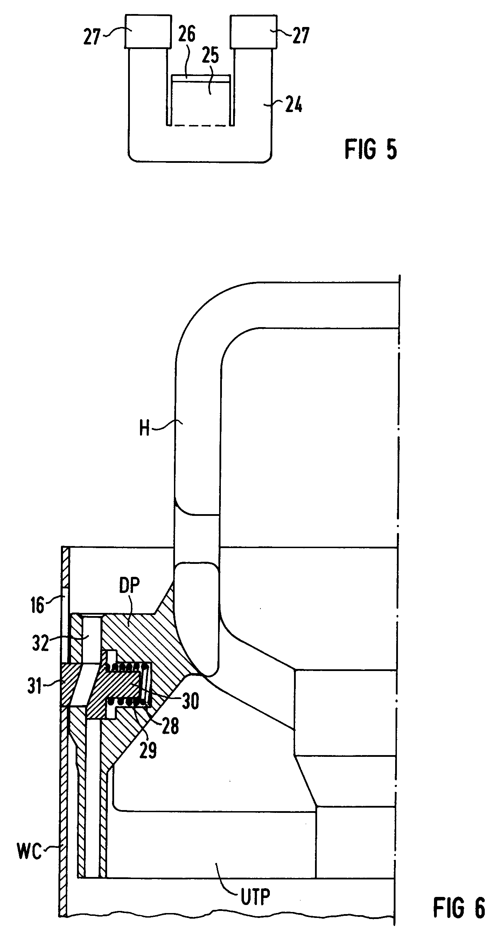

Eine vorteilhafte Federform ist auch in Figur 5 gezeigt, deren Mittelteil 24 U-förmig gebogen ist und ein seitlich und nach oben gerichtetes flaches Federteil 25 mit einem Verriegelungsteil 26 trägt. Die Schenkelenden 27 können im Oberteil eingehängt, angeschraubt oder angeschweißt sein, während das Verriegelungsteil 26 in das Fenster des Brennelement-Kastens eingreift.

Statt Blattfedern, die gelegentlich zum Brechen neigen, können als Verriegelungsfedern auch Schraubenfedern benutzt werden. So kann insbesondere als Verriegelungsteil ein vom Oberteil gehaltener, gegen die Rückstellkraft der schraubenförmigen Verriegelungsfeder verschiebbarer, in das Fenster des Brennelement-Kastens hineinragender Riegel verwendet werden.

Figur 6 zeigt eine derartige Ausbildung, bei der das den Rahmen des Oberteils bildende Distanzstück eine Ausnehmung 28 aufweist, in der die schraubenförmige Verriegelungsfeder 29 so gelagert ist, daß ein in der Ausnehmung liegendes Ende 30 des Riegels nach außen gedrückt wird. In dieser nach außen gedrückten Stellung greift das andere Ende 31 des Riegels in das Fenster 16 des Brennelement-Kastens WC ein. Auch hier ermöglichst eine Demontage-Bohrung 32, durch Einschieben eines Stiftes den Riegel zurückzudrücken, wobei die Feder 30 zusammengedrückt und das Fenster 31 des Brennelement-Kastens freigegeben wird.

Nach einer bevorzugten Ausführungsform ist das Verriegelungsteil als eine vom Oberteil gehaltene, ungefähr senkrecht zur Brennelementachse gegen die Rückstellkraft der Verriegelungsfeder schwenkbare Klinke ausgebildet.

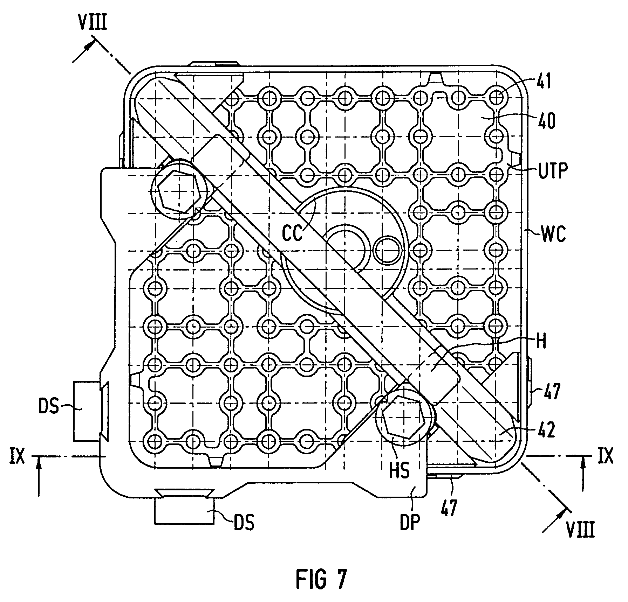

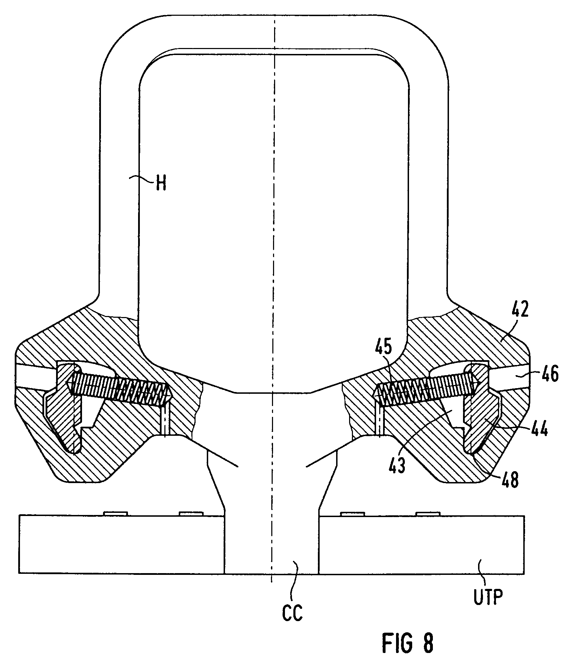

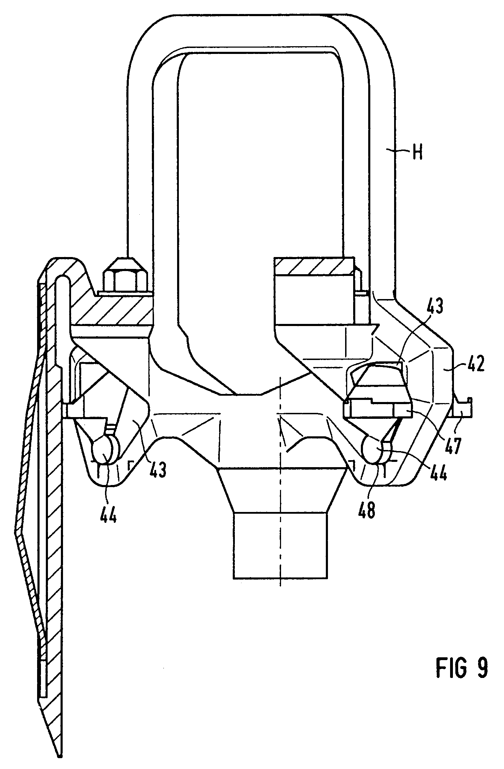

Eine derartige Ausführungsform ist in Figur 7 in einer Aufsicht auf das Brennelement-Oberteil, in Figur 8 in einem Querschnitt durch den Griff und in Figur 9 in einem Längsschnitt durch das Oberteil gezeigt.

Das Oberteil ist in diesem Fall mehrstückig und enthält einen diagonal über den rechteckigen Querschnitt des Brennelementes erstreckenden Bügel H, der in Rahmenteile übergeht, die von innen an gegenüberliegende Ecken des Brennelement-Kastens WC anliegen und über die mittels der Befestigungsschrauben HS ein Rahmenteil angeschraubt ist, das den oberen Rand des Brennelement-Kastens übergreift und als Distanzstück DP die Distanzfedern DS trägt, an denen die Oberteile benachbarter Brennelemente abgestützt sind.

Die Deckplatte UTP mit Durchlaßöffnungen 40 für das Kühlmittel und Führungsöffnungen 41 für die oberen Verschlußstücke der Brennstäbe ist an einer leicht exzentrischen Zentralhülse CC befestigt, die an dem Griff angegossen ist.

In Figur 8 ist erkennbar, daß das Rahmenteil 42, das von innen an einer Ecke des Brennelement-Kastens anliegt, eine Ausnehmung 43 trägt, in der ein Gelenkteil 44 der Klinke und die Verriegelungsfeder 45 gelagert ist. Zur Montage kann die Verriegelungsfeder 45 über eine Bohrung 46 eingesetzt und soweit zusammengedrückt werden, daß das Verriegelungsteil, von dem in Figur 8 nur das Gelenkteil 44 erkennbar ist, von der Seite her in die Ausnehmung 43 eingesetzt werden kann.

Diese Ausführung der Ausnehmung, Lagerung und Montage kann auch bei dem Riegel nach Figur 6 vorgesehen sein. Das Verriegelungsteil kann dabei eine Zunge enthalten, die durch die Öffnung 46 hindurch diametral in ein entsprechendes Fenster in der Brennelement-Kastenecke eingreift. Figur 9 läßt jedoch erkennen, daß das Verriegelungsteil eine gegabelte Zunge trägt, um in der Ecke des Brennelement-Kastens in entsprechende Fenster der aneinander anliegenden Kastenwände einzugreifen.

Die Ausnehmung 43 bildet dabei in ihrem unteren Teil eine ungefähr halbkugelförmige oder teilzylindrische Gelenkpfanne 48. Das Gelenkteil 44 trägt dementsprechend ebenfalls ein halbkugelförmiges oder teilzylindrisches Ende, wobei der Krümmungsradius des Gelenkteiles kleiner ist als der Krümmungsradius der Pfanne. Bei einer Schwenkbewegung des Verriegelungsteils rollt daher dieses halbrunde Profil des Gelenkteils auf der Pfanne ab.

In den Figuren 6 und 8 ist erkennbar, daß das Verriegelungsteil mit einem erheblichen Spiel nach allen Seiten in der Ausnehmung 43 sitzen kann, da seine endgültige Lage fixiert wird, wenn die Verriegelungsfeder das Verriegelungsteil nach außen drückt und die Riegel oder Zungen in das Fenster eingreifen. Dies erleichtert die Montage und vermindert die Gefahr, daß nach einem längeren Einsatz des Brennelementes im Kernreaktor das Verriegelungsteil durch Korrosion oder Verschmutzung mit dem Rahmenteil verklebt und bei einer Demontage des Brennelementes nicht mehr gegen die Rückstellkraft der Verriegelungsfeder zurückgeschoben werden kann. Insbesondere wird durch derartige Einflüsse die Schwenkbewegung der Klinke nach den Figuren 7 bis 9 praktisch nicht gefährdet, da es aufgrund des großzügigen Spiels leicht losgebrochen und auch über Korrosions- und Schmutzschichten hinweg auf der Gelenkpfanne abrollen kann.

Beim Montieren des Brennelementes schnappen die federnden Verriegelungsteile von selbst in die Fenster und Öffnungen, die für die Halterung des Brennelement-Kastens am Brennelement-Oberteil vorgesehen sind, sobald das Oberteil in den Kasten eingesetzt wird. Zum Demontieren brauchen die an dieser Befestigung beteiligten Schrauben (die Positionen 19 in Figur 4 und HS in Figur 5 und 7) nicht gelöst zu werden. Ist die Verbindung als federnd gelagerter Riegel oder Klinke ausgebildet, so besteht auch keine Gefahr, daß Blattfedern abbrechen oder Teile der Verriegelung sich lösen und im Kühlmittelstrom verlorengehen, wo sie erhebliche Störungen der Anlage verursachen könnten.

Natürlich können entsprechende federnde Verriegelungen auch als lösbare Verbindung zwischen dem unteren Ende des Brennelement-Kastens und dem Brennelement-Unterende vorgesehen sein, sie sind aber in diesem Bereich des Brennelementes wegen der geringen thermischen und mechanischen Belastung in vielen Fällen nicht erforderlich.

## Patentansprüche

1. Brennelement für einen Siedewasserreaktor mit
a) einem Bündel ungefähr parallel zueinander angeordneter Brennstäbe (FR),
b) einem das Bündel haltenden Skelett mit einer an einem Griff (H) gehalterten Deckplatte (UTP) am oberen Ende des Bündels, einer Bodenplatte (LTP) am unteren Ende des Bündels und mindestens einem Tragelement (WR), das die Bodenplatte und die am Griff gehaltene Deckplatte miteinander verbindet, und
c) einem Brennelement-Kasten (WC), in dem das Skelett und das Bündel eingesetzt sind, **gekennzeichnet durch** redundante Tragmittel (SCR, SG), die beim Anheben des Griffes die Bodenplatte (LTP), den Brennelement-Kasten (WC) und die Deckplatte (UTP) zusammenhalten.

2. Brennelement nach Anspruch 1, **dadurch gekennzeichnet**, daß die Bodenplatte in ein am Kasten befestigtes Fußteil (FT) eingesetzt ist und die redundanten Tragmittel einen am Brennelement-Kasten und der Deckplatte oder dem Griff angreifenden lösbaren oberen Anschlag (13) enthalten. (Figur 1)

3. Brennelement nach Anspruch 1, **dadurch gekennzeichnet**, daß die redundanten Tragmittel einen am Brennelement-Kasten (WC) und an der Deckplatte (UTP) oder dem Griff (H) angreifenden oberen Anschlag enthalten, der zumindest beim Anheben des Griffes (H) einen Maximalabstand (d) zwischen Griff und einem an der Bodenplatte angeordneten unteren Teil des Brennelement-Kastens festlegt. (Figur 1)

4. Brennelement nach einem der Ansprüche 1 bis 3, **dadurch gekennzeichnet**, daß die redundanten Tragmittel einen am Brennelement-Kasten und an der Bodenplatte (LTP) und/oder einem die Bodenplatte tragenden Fußteil (FT) angreifenden, lösbaren unteren Anschlag enthalten, der zumindest beim Anheben des Brennelement-Kastens (WC) einen Maximalabstand (d) zwischen der Bodenplatte (LTP) und einem an der Deckplatte (UTP) angeordneten, oberen Teil des Brennelement-Kastens (WC) festlegt. (Figur 1)

5. Brennelement nach Anspruch 3 oder 4, **dadurch gekennzeichnet**, daß im montierten Zustand des Brennelementes der Anschlag (SCR oder 13) in einer Aussparung (9 oder 11) des Brennelement-Kastens und an einer der Aussparung gegenüberliegenden Anschlagfläche des Skeletts gehalten ist und zur Demontage des Brennelementes mittels eines Werkzeugs so weit beweglich ist, daß der Brennelement-Kasten gegenüber dem Skelett verschiebbar ist. (Figur 1)

6. Brennelement nach Anspruch 4, **dadurch gekennzeichnet**, daß der untere Anschlag als quer zur Brennelementachse durch den Brennelement-Kasten (WC) und das Fußteil (FT) durchgreifende Schraube mit einem von außen in dem Brennelement-Kasten eingesenkten Kopf (SCH) und einer vom Inneren des Fußteils zugänglichen, auf den Kopf gerichteten Bohrung (SCB) ausgebildet ist, die nach dem Einschrauben der Schraube im Fußteil aufgeweitet ist. (Figur 2)

7. Brennelement nach Anspruch 3, **dadurch gekennzeichnet**, daß der obere Anschlag (21) federnd am Skelett gehalten ist und quer zur Brennelementachse durch ein Fenster (16) des Brennelement-Kastens (WC) greift. (Figur 4)

8. Brennelement für einen Siedewasser-Reaktor, das im montierten Zustand enthält:
a) Ein Bündel ungefähr zueinander paralleler Brennstäbe (FR),
b) ein Unterende mit einem Fußteil (FT) und einer Bodenplatte (LTP) als unterem Anschlag für die Brennstäbe,
c) ein Oberende mit einer Deckplatte (UTP) als oberen Anschlag für die Brennelement und einem mit der Deckplatte und einem seitlich überstehenden Distanzstück (FM) verbundenen Griff (H),
d) Abstandhaltern (SP) zur seitlichen Fixierung der Brennstäbe,
e) einem das Bündel mit den Abstandhaltern, die Bodenplatte und die Deckplatte seitlich umgebenden Brennelement-Kasten (WC) und Haltemittel (SCR) zur Halterung des Unterendes am Brennelement-Kasten, **gekennzeichnet durch** eine vom Oberende gehaltene Verriegelungsfeder (SG) mit einem durch ein Fenster (11) des Brennelement-Kastens greifenden Verriegelungsteil (13). (Figur 1)

9. Brennelement nach Anspruch 8, **dadurch gekennzeichnet**, daß das Oberende (UTP, H) gegen die Rückstellkraft einer Spannfeder (4) zum Unterende (LTP, FT) verschiebbar und das Verriegelungsteil (13) bei verschobenen Oberende gegen die Rückstellkraft der Verriegelungsfeder aus dem Fenster beweglich ist.

10. Brennelement nach Anspruch 8 oder 9, **dadurch gekennzeichnet**, daß die Verriegelungsfeder ein in Richtung des Unterendes flach am oberen Teil des Brennelement-Kastens (WC) anliegendes Federteil (18) aufweist, das am Oberteil (H) befestigt ist, vorzugsweise mit einem Ende am Oberteil angeschraubt ist, und dessen unteres Ende (21) hakenförmig von oben in das Fenster (16) eingreift. (Figur 4)

11. Brennelement nach Anspruch 10, **dadurch** **gekennzeichnet**, daß die Verriegelungsfeder eine Angriffsfläche (22) und das Oberende eine von oben zur Angriffsfläche führende Demontage-Bohrung (23) enthält. (Figur 3)

12. Brennelement nach Anspruch 8 oder 9, **dadurch gekennzeichnet**, daß das Verriegelungsteil als ein vom Oberteil gehaltener, gegen die Rückstellkraft der Verriegelungsfeder (29) verschiebbarer, in das Fenster (28) hineinragender Riegel (31) ausgebildet ist. (Figur 6)

13. Brennelement nach Anspruch 12, **dadurch gekennzeichnet**, daß das Oberteil (H, DP) eine Ausnehmung (28) aufweist, in der die Verriegelungsfeder (29) und der Riegel (30, 31) so gelagert sind, daß ein in der Ausnehmung gelagertes Ende (30) des Riegels nach außen gedrückt wird. (Figur 6)

14. Brennelement nach Anspruch 8 oder 9, **dadurch gekennzeichnet**, daß das Verriegelungsteil (44, 47) als eine vom Oberteil (H, DP) gehaltene, ungefähr senkrecht zur Brennelementachse gegen die Rückstellkraft der Verriegelungsfeder (45) schwenkbare Klinke (44, 47) ausgebildet ist. (Figur 8, 9)

15. Brennelement nach Anspruch 14, **dadurch gekennzeichnet**, daß das Oberteil ein von innen an einer Ecke des Brennelement-Kastens anliegendes Rahmenteil (42) mit einer Ausnehmung (43) aufweist und daß in dieser Ausnehmung die Verriegelungsfeder (45) und ein Gelenkteil der schwenkbaren Klinke gelagert ist.

16. Brennelement nach Anspruch 15, **dadurch gekennzeichnet**, daß die Ausnehmung eine etwa halbkugelförmige oder zylindrische Gelenkpfanne (48) bildet, auf der das entsprechend geformte Gelenkteil (44) der Klinke abrollt. (Figur 8)

17. Brennelement nach Anspruch 15 oder 16, **dadurch gekennzeichnet**, daß die Ausnehmung nach beiden aneinander anliegenden Kastenwänden der Ecke offen ist und das die Klinke seitlich in die Ausnehmung eingeführt ist, in der Ausnehmung ein erhebliches Spiel nach allen Richtungen besitzt und durch die Verriegelungsfeder gehalten ist.

18. Brennelement nach Anspruch 17, **dadurch gekennzeichnet**, daß das Verriegelungselement eine gegabelte Zunge (47) aufweist, die in der Ecke des Brennelement-Kastens in entsprechende Fenster der aneinander anstoßenden Kastenwände eingreift.
